# EUROPÄISCHE PATENTSCHRIFT

(11) **EP 0 670 196 B1**
(45) Veröffentlichungstag und Bekanntmachung des Hinweises auf die Patenterteilung: **29.04.1998**
(21) Anmeldenummer: 95101837.3
(22) Anmeldetag: 10.02.1995
(51) Int. Cl.: B23K 37/02, B23K 37/00, B23K 9/127, B23K 7/10

(54) **Vorrichtung zum Schweissen von Profilkörpern auf Flächenkörpern**
Device for welding profiled bodies on bodies with surfaces
Dispositif de soudage de corps profilés sur des corps avec surfaces

(30) Priorität: 04.03.1994 DE 9403709 U
(43) Veröffentlichungstag der Anmeldung: 06.09.1995
(73) Patentinhaber: Steinecker Entwicklungs GmbH & Co., D-85318 Freising/Attaching (DE)
(72) Erfinder: Penger, Georg, D-85406 Oberappersdorf (DE)
(74) Vertreter: Grünecker, Kinkeldey, Stockmair & Schwanhäusser Anwaltssozietät

(56) Entgegenhaltungen:
- WO-A-88/03456
- CH-A- 642 583
- US-A- 5 015 821
- US-A- 5 070 792

## Beschreibung

Die Erfindung betrifft eine Vorrichtung zum Schweißen von Profilkörpern auf Flächenkörpern, insbesondere gekrümmten Flächenkörpern, mit wenigstens einem Schweißbrennerkopf.

Das Anschweißen von Profilkörpern an Flächenkörpern, insbesondere gekrümmte und großflächige Körper, wird häufig noch von Hand durchgeführt, da bekannte Vorrichtungen, die eine automatische Verschweißung ermöglichen würden, sehr aufwendig sind. Die Probleme zum Schweißen von Profilkörpern auf Flächenkörpern treten z.B. auf, wenn man bei der Herstellung von in Sudhäusern benötigten Sudgefäßen oder dergl. am Umfang der Sudgefäßwand aus Profilkörpern, beispielsweise Winkeln, bestehende Heizzargen anschweißen muß. Der Durchmesser der Sudgefäße kann zwischen 2 und 7 m betragen. Entsprechend aufwendig ist es, am äußeren Umfang umlaufende Profilkörper als Heizzargen anzuschweißen. Heute werden die Heizzargen üblicherweise vorfixiert an der Außenwand angeheftet, und es folgt sodann im allgemeinen noch ein von Hand durchgeführter umlaufender Schweißvorgang. Die Probleme treten gleichermaßen auch dann auf, wenn am Boden, insbesondere an einem bombierten oder gewölbten Boden, solche Heizzargen in Form von Profilkörpern angeschweißt werden sollen.

Aufgabe der Erfindung ist daher, eine Vorrichtung anzugeben, mit der wesentlich einfacher als bisher das Schweißen von Profilkörpern auf Flächenkörpern, insbesondere gekrümmten Flächenkörpern, durchgeführt werden kann.

Zur Lösung dieser Aufgabe wird erfindungsgemäß vorgeschlagen, daß die Lagezuordnung des Schweißbrennerkopfes zur Schweißnaht von einem profilierten Nahtabtaster bestimmt wird, dessen Profilgebung auf das Profil des Profilkörpers abgestimmt ist, wobei der Nahtabtaster auf den Profilkörper zu beaufschlagbar ist und mit Rollen versehen ist, über die er sich auf den Profilkörpern abstützt.

Nach der Erfindung wird die Lage des Schweißbrennerkopfes von einem profilierten Nahtabtaster bestimmt, der damit die Lage der zu erzeugenden Schweißnaht bestimmt. Dabei erhält der Nahtabtaster das Profil des Profilkörpers, so daß er gegen den Profilkörper angestellt werden kann und den Profilkörper umschließt und damit die Lage des Profilkörpers erfaßt. Die exakte Lageerfassung erfolgt bei Anstellen des Nahtabtasters gegen den Profilkörper über Rollen, die im Nahtabtaster angeordnet sind und die in Anlage mit der Außenfläche des Profilkörpers kommen. Die entsprechende Ausrichtung des Nahtabtasters wird dann automatisch auf den Schweißbrennerkopf übertragen, so daß eine automatische Lagepositionierung des Schweißbrennerkopfes stattfinden kann. Dann braucht der Flächenkörper nur noch in eine Relativbewegung zum Nahtabtaster versetzt zu werden, so daß der Profilkörper dann kontinuierlich bei Vorbeilaufen am Schweißbrennerkopf angeschweißt wird.

In vorteilhafter Ausgestaltung der Erfindung ist der Nahtabtaster an einem Haltearm auswechselbar angeordnet. Der Nahtabtaster kann damit durch Austausch in optimaler Weise an den Verlauf des Profilkörpers angepaßt werden. Als geeignete Rollen zum Abtasten von Profilkörpern haben sich Prismenrollen erwiesen, insbesondere wenn die Profilkörper Winkelprofilkörper sind.

In diesem Falle weist der Nahtabtaster dann einen winkelförmigen Querschnitt auf.

In vorteilhafter Ausgestaltung dieser Ausführungsform besitzt der Nahtabtaster an seinen Innenflächen jeweils zwei in Verlaufsrichtung der Schweißnaht beabstandete Rollen. Dies ermöglicht ein genaues Abtasten und Aufsetzen des Nahtabtasters auf dem Profilkörper. Der Nahtabtaster kann gegen die Profilkörper mit unterschiedlichen Mitteln beaufschlagt werden, wie z.B. elektrohydraulisch oder auch pneumatisch, wobei sich insbesondere eine pneumatische Andrückvorrichtung für den Nahtabtaster als zu bevorzugen herausgestellt hat.

In vorteilhafter Weiterbildung der Erfindung ist der Nahtabtaster und der Schweißkopf an einem Kreuzschlitten angeordnet. Über den Kreuzschlitten wird der Nahtabtaster beaufschlagt und es wird die Bewegung dann auch auf den Schweißkopf übertragen, so daß der Nahtabtaster über den Kreuzschlitten die Lage des Schweißkopfes bestimmt. In weiterer vorteilhafter Ausgestaltung der Erfindung wird insbesondere zur Erhöhung der Leistung vorgeschlagen, zwei Nahtabtaster zum gleichzeitigen Anschweißen von zwei beabstandeten Schweißnähten an dem Kreuzschlitten über Haltearme anzuordnen. Beispielsweise beim Heizzargenschweißen können dann zwei Heizwinkel gleichzeitig am Außenumfang an der Behälterwand angeschweißt werden. Um Lagetoleranzen ausgleichen zu können, ist der Abstand zwischen den beiden Nahtabtastern in diesem Fall veränderlich.

In einer weiteren vorteilhaften Ausgestaltung der Erfindung ist ein Sensor zum Erfassen von Löchern oder Ansätzen im Profilkörper im Bereich des Nahtabtasters angeordnet. Dieser Sensor kann feststellen, ob die zu erzeugende Schweißnaht eine Unterbrechung erfährt, indem beispielsweise ein anzuschweißendes Profil sich dem Ende nähert oder Löcher aufweist, an denen keine Schweißnaht erzeugt werden soll. In diesem Falle schaltet der Sensor dann die Schweißvorrichtung automatisch ab.

In weiterer vorteilhafter Ausgestaltung ist vorgesehen, daß der Nahtabtaster um eine Vertikalachse schwenkbar am zugeordneten Halterarm angeordnet ist. Dies eröffnet die Möglichkeit, daß sich der Nahtabtaster den jeweiligen Gegebenheiten optimal anpassen kann. In diesem Zusammenhang ist es auch von Vorteil, wenn eine Vorrichtung zum Arretieren der Schwenkstellung des Nahtabtasters am Haltearm vorgesehen ist. Diese Vorrichtung ermöglicht es, die jeweilige Schwenkstellung z.B. dann zu arretieren, wenn der Nahtabtaster am Ende eines Profils angekommen ist und mit den vorlaufenden Rollen bereits außerhalb des Profils liegt. Damit dann bis zum Ende weiter geschweißt werden kann, kann der Nahtabtaster arretiert werden, so daß er auch ohne Abstützung seine Stellung beibehält.

Die Erfindung wird im folgenden anhand der in der Zeichnung dargestellten Ausführungsformen erläutert. Dabei zeigt:
- Fig.1: eine schematische, perspektivische Ansicht in teilweise geschnittener Darstellung einer erfindungsgemäßen Vorrichtung und
- Fig.2: eine Draufsicht etwa in Richtung des Pfeiles II der Fig. 1 auf einen gegenüber der Fig. 1 etwas abgewandelten Nahtabtaster.

In der Zeichnung ist insgesamt mit 1 die erfindungsgemäße Vorrichtung bezeichnet. Sie dient dazu, an einem Flächenkörper 2 einen Profilkörper 3, in dem gezeigten Ausführungsbeispiel ein Winkelprofil anzuschweißen. Die Notwendigkeit einer Anschweißung von derartigen Profilkörpern an einen Flächenkörper 2 ergibt sich beispielsweise bei der Herstellung von Sudpfannen. Die Profilkörper dienen dabei als Heizzargen und leiten Heizmedium, z.B. Heißdampf. Im gezeigten Beispiel wird der Profilkörper 3 an einer vertikal stehenden gekrümmten Wand 2 angeschweißt. In gleicher Weise kann die erfindungsgemäße Vorrichtung aber auch zum Anschweißen von Profilkörpern in Form von Spiralen an konvexen oder konkaven Klöpperböden eingesetzt werden, wie das ebenfalls bei der Herstellung von Brauereigefäßen häufig notwendig ist. Die Vorrichtung 1 umfaßt im dargestellten Ausführungsbeispiel zwei Nahtabtaster 4a und 4b, deren Querschnittsprofil dem Querschnittsprofil des Profilkörpers 3 angepaßt ist. Die Nahtabtaster 4a und 4b sind austauschbar an den Haltearmen 5 befestigt und können so je nach anzuschweißendem Profil ausgetauscht bzw. den Erfordernissen angepaßt werden. Auf den Innenflächen weisen die Nahtabtaster Prismenrollen 6 auf, die sich auf den Außenflächen der Profilkörper 3 beim Schweißvorgang abstützen und damit die Oberfläche der Profilkörper 3 erfassen. In der Zeichnung ist nur ein oberer Profilkörper dargestellt. Dem Nahtabtaster 4b könnte aber auch ein zweiter unterhalb des dargestellten Profilkörpers 3 angeordneter Profilkörper abgetastet und angeschweißt werden. Über einen Kreuzschlitten 9 sind den Nahtabtastern Haltearme 7 für den Schweißbrenner 8 zugeordnet. Die Position der Nahtabtaster 4 bestimmt über den Kreuzschlitten 9 somit auch die Position der Schweißköpfe 8. Der Kreuzschlitten 9 ist in nicht näher dargestellter Weise an einem Ausleger eines Geräteträgers angeordnet und kann entlang der Pfeile P1 bis P4 horizontal und/oder vertikal verschoben werden. Die Verschiebung erfolgt über einen nicht näher dargestellten, herkömmlichen pneumatischen Antrieb. Der Haltearm 9a des Kreuzschlittens 9 ist gegenüber dem Haltearm 9b so gelagert, daß der Abstand in der Höhenlage zwischen den beiden Armen verändert werden kann, so daß die beiden Nahtabtaster in unterschiedlichen Abständen zueinander arbeiten können.

Die Versorgung der Schweißbrenner 8 erfolgt in ebenfalls herkömmlicher Art und Weise über entsprechende Versorgungsleitungen 10.

Der Brenner 8 wird an dem Haltearm 7 gehalten und ist dabei so angeordnet, daß er um die Achse A pendelnd eingestellt werden kann. Diese Anordnung ermöglicht es, evtl. Toleranzen ausgleichen zu können. Mit der erfindungsgemäßen Vorrichtung kann nun wie folgt gearbeitet werden.

Zunächst wird ein Flächenkörper, beispielsweise die Wand 2 eines Sudgefäßes, auf einem sternförmigen Träger 11 positioniert, wobei zuvor die Winkelprofile 3 an einigen wenigen Punkten mit dem Flächenkörper 2 verheftet worden sind. Der nicht dargestellte Geräteträger, an dem die Schweißvorrichtung 1 angeordnet ist, fährt nun die Schweißvorrichtung in Richtung des Pfeiles P2 in geeigneter Höhe gegen den Flächenkörper 2 so lange, bis der Nahtabtaster 4a das Profil 3 ertastet. Dabei kommen die Prismenrollen 6 in Anlage auf der Außenfläche des Profilkörpers 3, und es erfolgt gegebenenfalls eine autoamtische Nachregelung in Pfeilrichtung P3 P4 oder auch P1 P2, d.h., der Nahtabtaster positioniert über den Kreuzschlitten 9 den Haltearm 7 für den Brennerkopf 8, so daß eine automatische Lagebestimmung des Brennerkopfes 8 stattfindet. Nun kann der Schweißvorgang durch entsprechende Beaufschlagung des Brennerkopfes 8 beginnen. Dabei setzt sich die Drehvorrichtung 11 in Drehbewegung und führt so die zu erzeugende Schweißnaht 12 am Brennerkopf 8 in geeigneter Lage vorbei. Dieser Vorgang kann kontinuierlich erfolgen. Ist die Naht 12 fertiggestellt, so kann der Kreuzschlitten wieder in Pfeilrichtung P1 wegbewegt werden und der Flächenkörper 2 umgedreht werden. Dann kann der Brennerkopf 8 die untere Naht 13 in gleicher Weise erzeugen.

Um feststellen zu können, wann das Winkelprofil eine Unterbrechung hat oder wo Löcher im Winkelprofil sind, ist dem Nahtabtaster 4 ein Sensor 14 zugeordnet (in dem gezeigten Ausführungsbeispiel nur am unteren Nahtabtaster 4b der Übersichtlichkeit halber eingezeichnet). Wenn der Sensor erkennt, daß eine Lücke im Profil vorhanden ist oder daß das Profil zu Ende ist, schaltet er automatisch den Brennerkopf 8 ab. Zu bemerken ist noch, daß ebenfalls aus Gründen der Übersichtlichkeit der dem Haltearm 7 für den oberen Brennerkopf 8 entsprechende untere Haltearm für den unteren Brennerkopf nicht dargestellt ist.

Mit der erfindungsgemäßen Schweißvorrichtung können selbstverständlich nicht nur kreisförmige Schweißvorgänge, sondern auch spiralförmige Schweißvorgänge durchgeführt werden, d.h., die Vorrichtung ist genauso für Schweißvorgänge einsetzbar, bei denen dem Winkelprofil drei entsprechende Profile spiralförmig um Flächenkörper umlaufend anzuschweißen sind.

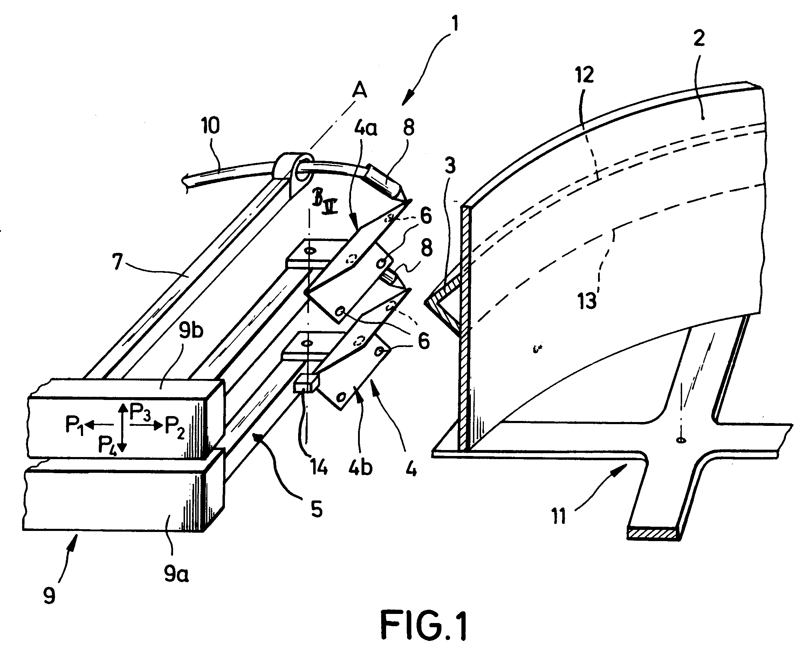

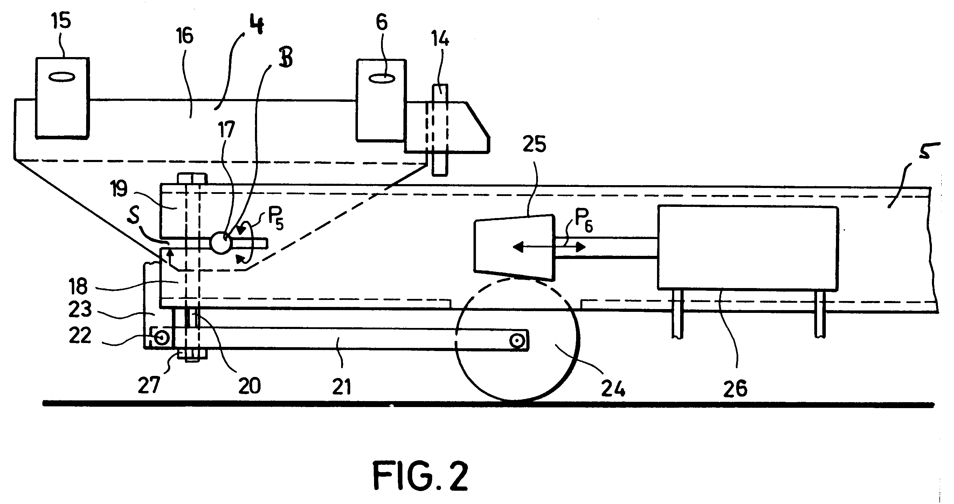

In der Fig. 2 ist in Draufsicht, etwa in Pfeilrichtung II der Fig. 1, ein Haltearm 5 gezeigt, der in Abwandlung zum Ausführungsbeispiel der Fig. 1 einen an seiner Unterseite angeordneten Nahtabtaster 4 trägt. Mit diesem Ausführungsbeispiel sind die Prismenrollen 6 in Lagerlaschen 15 gelagert. Die Lagerlaschen sind an Profilflächen 16 des Nahtabtasters 4 angebracht. Der Nahtabtaster ist um die Achse B mittels eines Schwenkbolzens 17 in Pfeilrichtung P5 verschwenkbar, so daß der Nahtabtasters bezüglich des Haltearms 5 eine gewisse Verschwenkbewegung ausführen kann. Das den Nahtabtaster zugewandte Ende des Haltearms 5 ist als Klemmteil ausgebildet, wobei die dabei gebildeten Klemmbacken 18 und 19 durch Zug an dem Spannbolzen 20 aufeinanderzubewegt werden können und dabei den Schwenkbolzen 17 ein einklemmen. Um den Zug auf den Spannbolzen ausüben zu können, wird dieser von einem Hebelarm 21 beaufschlagt, der bei 22 schwenkbar gegenüber einem Klemmbacken 18 angeordneten Befestigungselement 23 gelagert ist und am anderen Ende eine Rolle 24 trägt. Die Rolle ist ihrerseits über ein kegelstumpfförmig ausgebildetes Element 25 beaufschlagbar, das mittels eines Pneumatikzylinders in Richtung der Pfeile P6 hin- und herbewegbar ist.

Der Pneumatikzylinder 26 ist abhängig vom Signal des Sensors 14 beaufschlagbar.

Während des normalen Schweißvorgangs, solange also alle Rollenpaare des Nahtabtasters auf dem anzuschweißenden Winkelprofil aufliegen, ist der Nahtabtaster um die Achse B frei schwenkbar am Haltearm 5 angeordnet und kann somit in der Art einer Wippe Unebenheiten ausgleichen und außerdem unterschiedlichen Krümmungen des Flächenkörpers, an dem der Schweißvorgang stattfinden soll, in einfacher Art und Weise folgen.

Stellt nun der Sensor 14 fest, daß das Ende eines anzuschweißenden Profils erreicht ist, so daß also zunächst die in der Zeichnung rechts zu erkennende Prismenrolle mit Fortsetzung der Relativbewegung zwischen Winkelprofil und Schweißvorrichtung außer Eingriff mit dem Winkelprofil kommt, so gibt er ein Signal an den Pneumatikzylinder 26 ab. Der Pneumatikzylinder beaufschlagt das kegelstumpfförmige Element 25 in der Zeichnung nach links, so daß dadurch die Rolle 24 nach unten gedrückt wird. Diese Bewegung wird auf den Hebelarm 21 übertragen, der dadurch seinerseits um die Achse 22 im Uhrzeigersinn dreht und dabei den Spannbolzen 20 über die Mutter 27 nach unten zieht, so daß der Spaltabstand S zwischen den beiden Klemmbacken 18 und 19 verringert wird. Damit wird der Schwenkbolzen 17 festgeklemmt, und damit wird der Nahtabtaster dann in der eingenommenen Schwenkstellung verriegelt bzw. verklemmt, so daß der Schweißvorgang trotzdem noch bis zum Ende durchgeführt werden kann, auch wenn die rechts dargestellte Prismenrolle 6 nicht mehr auf dem Winkelprofil abgestützt ist.

Die erfindungsgemäße Vorrichtung erlaubt es somit insgesamt in einfacher Weise, kontinuierlich Profilkörper, insbesondere auch an gekrümmten Flächenkörper, anschweißen zu können. Dabei wird durch die Nahtabtastung und die Aufhängung an einem Kreuzschlitten sowie die schwenkbare Aufhängung in der Art einer Wippe des Nahtabtasters an dem zugeordneten Haltearm gewährleistet, daß Lage- und Fertigungstoleranz in einem großen Maße ausgeglichen werden können und der Nahtabtaster unterschiedlichen Krümmungen einfach folgen kann. Der Nahtabtaster erfaßt jeweils die Lage der Naht und steuert den Brennerkopf entsprechend.

## Patentansprüche

1. Vorrichtung zum Schweißen von Profilkörpern auf Flächenkörpern, insbesondere gekrümmten Flächenkörpern, mit wenigstens einem Schweißbrennerkopf, **dadurch gekennzeichnet,** daß die Lagezuordnung des Schweißbrennerkopfes (8) zur Schweißnaht (12, 13) von einem profilierten Nahtabtaster (4, 4a, 4b) bestimmt wird, dessen Profilgebung auf das Profil des Profilkörpers abgestimmt ist, wobei der Nahtabtaster (4, 4a, 4b) auf den Profilkörper zu beaufschlagbar ist und mit Rollen (6) versehen ist, über die er auf dem Profilkörper abstützbar ist.

2. Vorrichtung nach Anspruch 1, **dadurch gekennzeichnet,** daß der Nahtabtaster (4, 4a, 4b) an einem Haltearm (5) auswechselbar angeordnet ist.

3. Vorrichtung nach Anspruch 1 oder 2, **dadurch gekennzeichnet,** daß die Rollen (6) als Prismenrollen ausgebildet sind.

4. Vorrichtung nach wenigstens einem der Ansprüche 1 bis 3, **dadurch gekennzeichnet,** daß die Profilkörper (3) Winkelprofilkörper sind.

5. Vorrichtung nach Anspruch 4, **dadurch gekennzeichnet,** daß der Nahtabtaster (4, 4a, 4b) winkelförmigen Querschnitt aufweist.

6. Vorrichtung nach wenigstens einem der vorangegangenen Ansprüche, **dadurch gekennzeichnet,** daß der Nahtabtaster (4, 4a, 4b) an seinen Innenflächen jeweils zwei in Verlaufsrichtung der Naht beabstandete Rollen (6) aufweist.

7. Vorrichtung nach wenigstens einem der vorangegangenen Ansprüche, **dadurch gekennzeichnet,** daß eine pneumatische Andrückvorrichtung für den Nahtabtaster vorgesehen ist.

8. Vorrichtung nach wenigstens einem der vorangegangenen Ansprüche, **dadurch gekennzeichnet,** daß der Nahtabtaster (4, 4a, 4b) und der Schweißbrennerkopf (8) an einem Kreuzschlitten (9) angeordnet sind.

9. Vorrichtung nach wenigstens einem der vorangegangenen Ansprüche, **dadurch gekennzeichnet,** daß zwei Nahtabtaster (4a, 4b) zum gleichzeitigen Anschweißen von entlang zweier beabstandeter Schweißnähte an dem Kreuzschlitten (9) über Haltearme (5) angeordnet sind.

10. Vorrichtung nach Anspruch 9, **dadurch gekennzeichnet,** daß der Abstand zwischen den beiden Nahtabtastern (4a, 4b) veränderlich ist.

11. Vorrichtung nach wenigstens einem der vorangegangenen Ansprüche, **dadurch gekennzeichnet,** daß ein Sensor (14) zum Erfassen von Löchern oder Ansätzen im Profilkörper (3) im Bereich des Nahtabtasters angeordnet ist.

12. Vorrichtung nach wenigstens einem der vorangegangenen Ansprüche, **dadurch gekennzeichnet,** daß der Nahtabtaster (4, 4a, 4b) um eine Vertikalachse (B) schwenkbar am zugeordneten Haltearm (5) angeordnet ist.

13. Vorrichtung nach Anspruch 12, **dadurch gekennzeichnet,** daß eine Vorrichtung (17 - 27) zum Arretieren der Schwenkstellung des Nahtabtasters am Haltearm (5) vorgesehen ist.

## Claims

1. Apparatus for welding profile bodies onto planar bodies, in particular curved planar bodies, comprising at least one welding torch head, **characterized in** that a positional assignment of said welding torch head (8) to a weld seam (12, 13) is defined by a profiled seam detector (4, 4a, 4b) whose profile shape is adapted to the profile of said profile body, said seam detector (4, 4a, 4b) being adapted to be activated toward said profile body and being provided with rolls (6) through which said seam detector can be supported on said profile body.

2. The apparatus according to claim 1, **characterized in** that said seam detector (4, 4a, 4b) is replaceably arranged on a holding arm (5).

3. The apparatus according to claim 1 or claim 2, **characterized in** that said rolls (6) are designed as prism rolls.

4. The apparatus according to at least one of claims 1 to 3, **characterized in** that said profile bodies (3) are angle profile bodies.

5. The apparatus according to claim 4, **characterized in** that said seam detectors (4, 4a, 4b) have an angular cross-section.

6. The apparatus according to at least one of the preceding claims, **characterized in** that said seam detector (4, 4a, 4b) has inner surfaces and is provided on each of its inner surfaces with two rolls (6) that are spaced apart in a direction of extension of the weld seam.

7. The apparatus according to at least one of the preceding claims, **characterized in** that a pneumatic contact-pressure device is provided for said seam detector.

8. The apparatus according to at least one of the preceding claims, **characterized in** that said seam detector (4, 4a, 4b) and said welding torch head (8) are arranged on a cross slide (9).

9. The apparatus according to at least one of the preceding claims, **characterized in** that two seam detectors (4a, 4b) are arranged on said cross slide (9) by holding arms (5) for simultaneously welding along two spaced-apart weld seams.

10. The apparatus according to claim 9, **characterized in** that a distance between said two seam detectors (4a, 4b) is variable.

11. The apparatus according to at least one of the preceding claims, **characterized in** that a sensor (14) is arranged in the area of said seam detector for sensing holes or attachments in said profile body (3).

12. The apparatus according to at least one of the preceding claims, **characterized in** that said seam detector (4, 4a, 4b) is arranged on the associated holding arm (5) to be pivotable about a vertical axis (B).

13. The apparatus according to claim 12, **characterized in** that an apparatus (17-27) is provided for locking the pivotal position of said seam detector on said holding arm (5).

## Revendications

1. Dispositif pour souder des corps profilés sur des corps plats, en particulier des corps plats courbes, comprenant au moins une tête de chalumeau de soudage, caractérisé en ce que la correspondance de position de la tête de chalumeau de soudage (8) aux cordons de soudure (12, 13) est déterminée à l'aide d'un explorateur de soudure profilé (4, 4a, 4b) dont le profilage est modulé en fonction du profil du corps profilé, dans lequel l'explorateur de soudure (4, 4a, 4b) peut être chargé contre le corps profilé et est muni de galets (6) à l'aide desquels il peut venir s'appuyer sur le corps profilé.

2. Dispositif selon la revendication 1, caractérisé en ce que l'explorateur de soudure (4, 4a, 4b) est disposé de manière interchangeable sur un bras de support (5).

3. Dispositif selon la revendication 1 ou 2, caractérisé en ce que les galets (6) sont réalisés en forme de galets pyramidaux.

4. Dispositif selon l'une quelconque des revendications 1 à 3, caractérisé en ce que les corps profilés (3) sont des corps profilés angulaires.

5. Dispositif selon la revendication 4, caractérisé en ce que l'explorateur de soudure (4, 4a, 4b) présente une section transversale angulaire.

6. Dispositif selon au moins une des revendications précédentes, caractérisé en ce que l'explorateur de soudure (4, 4a, 4b) présente, sur ses surfaces internes, respectivement deux galets (6) écartés dans la direction dans laquelle s'étend la soudure.

7. Dispositif selon au moins une des revendications précédentes, caractérisé en ce qu'on prévoit un dispositif de serrage pneumatique pour l'explorateur de soudure.

8. Dispositif selon au moins une des revendications précédentes, caractérisé en ce que l'explorateur de soudure (4, 4a, 4b) et la tête de chalumeau de soudage (8) sont disposés sur un chariot porte-outil à mouvements croisés.

9. Dispositif selon au moins une des revendications précédentes, caractérisé en ce que deux explorateurs de soudure (4a, 4b) pour le soudage simultané de deux cordons de soudure écartés l'un de l'autre sont disposés sur le chariot à mouvements croisés (9) par-dessus des bras de support (5).

10. Dispositif selon la revendication 9, caractérisé en ce que la distance entre les deux explorateurs de soudure (4a, 4b) est variable.

11. Dispositif selon au moins une des revendications précédentes, caractérisé en ce qu'un détecteur (14) est disposé dans la zone de l'explorateur de soudure pour détecter des trous ou des saillies dans le corps profilé (3).

12. Dispositif selon au moins une des revendications précédentes, caractérisé en ce que l'explorateur de soudure (4, 4a, 4b) est monté sur le bras de support (5) qui lui est attribué, en pivotement autour d'un axe vertical (B).

13. Dispositif selon la revendication 12, caractérisé en ce qu'on prévoit un dispositif (17-27) pour bloquer l'angle de pivotement de l'explorateur de soudure sur le bras de support (5).
